Europäisches Patentamt

(19) European Patent Office   (11) Publication number: **0 215 164**
**B1**
Office européen des brevets

(12) **EUROPEAN PATENT SPECIFICATION**

(45) Date of publication of the patent specification:   (51) Int. Cl.⁴: **A23F 5/48**
**06.12.89**

(21) Application number: **85306264.4**

(22) Date of filing: **04.09.85**

(54) Method for Aromatizing soluble coffee.

(43) Date of publication of application:
**25.03.87 Bulletin 87/13**

(45) Publication of the grant of the patent:
**06.12.89 Bulletin 89/49**

(84) Designated Contracting States:
**AT CH DE FR GB IT LI SE**

(56) References cited:
**DE-A- 1 692 390**
**FR-A- 2 271 774**
**FR-A- 2 336 088**

(73) Proprietor: **GENERAL FOODS CORPORATION,
250 North Street, White Plains, N.Y. 10625(US)**

(72) Inventor: **Katz, Saul Norman, 7 Dorchester Drive,
Monsey New York 10952(US)**
Inventor: **Kearney, Donald Thomas, 92 West 53rd Street,
Bayonne New Jersey 07002(US)**

(74) Representative: **Baillie, Iain Cameron et al, c/o Ladas &
Parry Isartorplatz 5, D-8000 München 2(DE)**

## Description

### TECHNICAL FIELD

This invention relates to a method for aromatizing soluble coffee and more particularly to a method for producing an improved aromatized glyceride for use in the aromatization of soluble coffee.

### BACKGROUND ART

Grinder gas, that is the gas which is released from roasted whole coffee beans when their internal cell structure is disrupted, such as during grinding of the beans and which also continues to be evolved from the disrupted and/or fractured beans for a short period thereafter, has long been recognized in the art as a highly desirable natural coffee aroma. A great deal of effort has been directed toward the development of a method for recovering and fixing a high percentage of grinder gas aromas on a substrate for subsequent addition to coffee products, particularly soluble coffee powder.

Clinton et al. in U.S. Patent No. 3,021,218 disclose a method whereby a coffee aroma condensate is vaporized to admit the more volatile coffee aromas into void spaces of a container filled with soluble coffee. Johnston teaches addition of condensed grinder gas to chilled soluble coffee powder in U.S. Patent No. 2 306 061. These two methods are similar in that grinder gas aromas are contacted directly with coffee particles in order to improve the aromatics of the coffee product. However, both methods fail to provide the convenience, stability, and high level of grinder gas fixation, desired in the coffee field.

Several methods for fixing grinder gas aromatics in a glyceride substrate are known in the art, such glycerides as coffee oil, bland-tasting vegetable oils, and triacetin being especially useful for this purpose. Katz in U.S. Patent No. 3 939 291 teaches contacting condensed grinder gas and a glyceride in a pressure vessel at a temperature above the critical temperature of liquid carbon dioxide, then slowly venting the vessel while maintaining the temperature above carbon dioxide's critical temperature. Katz' method effectively prevents the formation of liquid carbon dioxide at any point during the glyceride aromatization procedure. Mahlmann discloses, in U.S. Patent No. 3 979 528, contacting a glyceride and condensed grinder gas in a pressure vessel at a temperature of 21.1°C to 23.9°C (70 to 75°F) and a pressure above 100 psia to enable aromatic transfer from the liquid carbon dioxide phase to the liquid glyceride phase, and then venting the vessel. Mahlmann's procedure involves repeated venting of said pressure vessel from a high pressure ranging from 517 kPa to 827 kPa (75 to 120 psig), to a low pressure of 0 kPa (0 psig). Siedlecki et al. in U.S. Patent No. 4 007 291 teach a procedure whereby a glyceride is contacted with condensed grinder gas in a pressure vessel at a temperature of 21.1°C to 29.4°C (70 to 85°F) and a pressure in excess of 4.82 MPa (700 psig), then slowly venting the pressure vessel, preferably isothermally. Howland et al. in U.S. Patent No. 4 119 736 disclose removal of a water phase from a pressure vessel containing condensed grinder gas at a pressure of in excess of 3.49 MPa (506.2 psia) and a temperature of greater than 0°C (32°F), contacting the demoisturized grinder gas with a glyceride, and slowly venting the pressure vessel. Howland et al. disclose that it is possible to separate aromas from the removed water phase, such as by vacuum distillation, and to reclaim or recycle vented aromatics.

It is an object of the present invention to produce an aromatized glyceride of improved quality which may be used to aromatize soluble coffee.

### SUMMARY OF THE INVENTION

It has been found according to the present invention that a vastly improved method for aromatizing soluble coffee powder with a glyceride, aromatized by contact with a grinder gas frost, is attained by a process comprising the steps of:

a) condensing, as a frost, grinder gas or other coffee aroma-bearing gas which has a high carbon dioxide content;

b) placing the grinder gas frost in a pressure vessel;

c) supplying heat to the contents of the vessel and allowing the frost to equilibrate at a pressure in excess of 3.49 MPa (506.2 psia) and at a temperature of greater than 0°C (32°F), to form three phases: (1) gaseous carbon dioxide plus aromatics, (2) liquid carbon dioxide plus aromatics, and (3) liquid water containing aromatics;

d) removing the water phase which contains aromatics from the vessel;

e) contacting a glyceride with the water phase of step d) for a time effective to transfer aromatics from said water phase to the glyceride to impart a "roasted and ground" coffee aroma to the soluble coffee product;

f) introducing the glyceride, contains aromatics transferred from the water phase, into the pressure vessel of step b);

g) supplying heat to the contents of the pressure vessel if necessary in order to raise the temperature to between 21.1°C to 29.4°C (70 and 85°F), and thereby increase the pressure to about 5.17 MPa to 6.55 MPa (750 to 950 psia), to form three phases: (1) gaseous carbon dioxide plus aromatics, (2) liquid carbon dioxide plus aromatics, and (3) liquid glyceride which contains water phase aromatics;

h) refluxing, in a packed column, liquid carbon dioxide and gaseous carbon dioxide phases, while slowly venting, thereby removing meager in aromatics carbon dioxide from the vessel and concentrating aromatics in the glyceride, until the pressure drops to about 4.48 MPa to 4.82 MPa (650 to 700 psia);

i) depressurizing the vessel;

j) obtaining an aromatized glyceride; and

(k) combining the aromatized glyceride with soluble coffee powder.

The method for aromatizing soluble coffee described above represents at least a two-fold improvement over the prior art. First, the aromatic transfer from water phase to glyceride of step (e) and the reflux system of step (h) result in about a 25 to 70% increase in the quantity of coffee aromatics transferred to the glyceride, as measured by gas chromatography, over the glyceride aromatization systems described in the art, specifically Siedlecki et al. and Howland et al. Said 25 to 70% increase in aromatic recovery translates to a significant increase in the aromatized glyceride yield from a given amount of grinder gas frost, thus greatly improving the efficiency of a grinder gas aromatization system and the economies thereof.

Second, the quality of the aromatized glyceride and thereby the aromatized soluble coffee powder produced by the present invention is largely improved over previous aromatization systems. The aromatized soluble coffee powder of the present invention, when compared to prior art coffee aromatization processes at an equivalent quantitative aroma level, as measured by gas chromatography, is found to impart a superior coffee aroma, with a more "groundsy", "roasted and ground", "high impact" coffee aroma character. The improved qualitative coffee aroma character of the present invention is directly attributable to the aroma balance of the aromatized glyceride which results from (1) recovering the aromatics from the water phase in step (e), and (2) concentration of the coffee aromatics through reflux in step (h).

## DETAILED DESCRIPTION OF THE INVENTION

The present invention is directed to combining with coffee solids an aromatized glyceride containing grinder gas aromatics which have been concentrated and condensed from a grinder gas frost. This invention is particularly described in terms of coffee grinder gas, which contains 80% to 90% by weight carbon dioxide; however, it is to be understood that other aroma-bearing gases which have a high carbon dioxide content such as coffee percolator vent gas and coffee roaster gas, may likewise be employed and are considered to be within the scope of this invention.

The most readily available source of grinder gas may be obtained by enclosing or hooding coffee grinding equipment, such as commercial grinders. The gases liberated from the ground coffee may be removed by a pump or rotary blower; additionally, when desired, a stream of inert, preferably moisture free, gas may be used to sweep gas from the coffee and to have the grinding operation take place in a substantially inert atmosphere. Such a process is described in U.S. Patent No. 2,156,212 which describes a method of collecting gases evolved during roasting, but which can be equally applied to the collection of gases evolved during the grinding or cellular disruption of whole freshly roasted coffee beans. If pumping is employed, it may be desirable to cool the gas ahead of the pump so that the heat added by pumping will not deteriorate the aromatics contained in the gas.

The chemical composition of the evolved gas is largely carbon dioxide together with water vapor and the characteristic aromatic constituents of roasted coffee. The amount of moisture in the gas may be lowered by the use of dry roasting conditions and low-moisture quenches or quenching mediums. The envolved gas is preferably passed through a first condenser where it is cooled to between 1.7°C and 10°C (35 and 50°F and where substantial quantities of water are removed. The removed water, typically termed "knockout water", may be subsequently contacted with a glyceride, as described below, to recover any coffee aromatics contained therein. The relatively low-moisture gas is then fed to a condenser, such as a jacketed, vertically-mounted, scraped-wall heat exchanger, which is cooled by means of a liquid gas refrigerant.

Preferably the condenser is cooled by means of liquid nitrogen and the gas flow into the exchanger is maintained within the range of about 0.305 to 1.524 $m^3$ per minute per square metre (1 to 5 cubic feet per minute per square foot) of heat exchanger surface. The nitrogen gas that evolves from the cooling system is useful as an inert gas stream which might be used elsewhere in the soluble coffee process, such as sweeping grinder gas from the grinder or inert gas packaging of the soluble coffee product.

The aroma bearing gas is condensed into the form of a frost as it comes into contact with the heat transfer wall of the condenser. Typical grinder gas frost is collected at a liquid nitrogen jacket temperature of −126.1°C to −142.8°C (−195°F to −225°F) contains approximately 87% carbon dioxide, approximately 10% water, and approximately 3% coffee aromas. The frost is removed from the condenser wall and collected for combination with a glyceride carrier. The frost may be held for a short period at low, such as liquid nitrogen, temperatures without deteriorating; however, it is preferred to immediately utilize the frost in accordance with this invention.

According to this invention, the grinder gas frost is placed in a pressure vessel. A sufficient amount of the grinder gas first is added to avoid the presence of an unsaturated carbon dioxide vapor phase. Heat is added to the contents of the vessel, such as by means of a 21.1°C to 29.4°C (70°F to 85°F) water jacket, to sublime the grinder gas frost and form a headspace pressure. At approximately 0.517 MPa (75 psia) solid carbon dioxide changes to liquid. The temperature corresponding to this phase change is −56.7°C (−70°F). At this condition, water and any trace glyceride present, as well as some of the organic aromatics, are in the solid state. The temperature of the vessel contents is raised preferably to about room temperature, at which condition the grinder gas aromatics will diffuse and establish an equilibrium among the gaseous carbon dioxide, liquid carbon dioxide, and water phases. Temperatures in excess of about 85°F should be avoided as degradation of the coffee aromatics may result. After the frost within the vessel has reached the desired temperature, and possibly after an equilibrium period of up to several hours, a peak pressure is reached.

The vessel contents at this peak pressure may be in three distinct phases including a bottom water phase, a liquid carbon dioxide phase, and a gaseous carbon dioxide phase with aroma present in each phase. After the pressure within the vessel has reached its peak, generally at about 5.17 MPa (750 psia) to about 6.55 MPa (950 psia), the waterphase is removed from the vessel. This can be done by simply draining the water through a valve in the bottom of the vessel.

The removed water phase is contacted with a glyceride, preferably coffee oil, in any apparatus that provides efficient liquid-liquid contact.

Optimally, the knockout water previously recovered may be incorporated herein. An agitated batch tank or a continuous apparatus such as a rotating disc or reciprocating plate column may be employed to contact the water phase with the glyceride. In a preferred embodiment of the invention, coffee oil is atomized into a batch tank containing the water phase, and the mixture is agitated mechanically with an impeller to ensure sufficient liquid-liquid contact.

Effective partioning of grinder gas aromatics from the water phase to the glyceride, preferably coffee oil, is achieved by contacting the water phase with the glyceride at a volume ratio of about 0.5:1 to about 4:1, and preferably about 1:1 to 1.5:1, water to glyceride. Said contact is generally conducted at a temperature of about 35°F (1.7°C) to about 120°F (48.9°C), typically at a temperature of about 50°F (10.0°C) to about 100°F (37.8°C), and preferably at about ambient temperature. The transfer of coffee aromas to the glyceride is primarily by diffusion and the rate thereof is generally improved at higher temperatures. However, it is essential to the present invention that degradation of the coffee aromas contained in the removed water phase be prevented, and therefore that temperatures in excess of 48.9°C (120°F), and preferably 29.4°C (85°F), be avoided during the liquid-liquid contact.

The contact time necessary for effective partitioning of the coffee aromas from the water phase to the glyceride is primarily dependent upon the contact temperature, contact ratio of water to glyceride, type of liquid-liquid contact apparatus employed, and degree of agitation supplied. However, in order to partition the coffee aromas which have been found by the present invention to be necessary to deliver a "groundsy" aroma character to the final aromatized soluble coffee, it has been found that a certain minimum contact time is required. For example, in one embodiment of the present invention wherein a water phase containing grinder gas coffee aromas was contacted with coffee oil at a volume ratio of 1:1, in an agitated batch reactor at a temperature of 23.9°C (75°F), it was found that a minimum contact time of 8 minutes, and preferably at least 15 minutes, was needed to transfer sufficient grinder gas aromas to the coffee oil to achieve the desired "groundsy" aroma character in the aromatized soluble coffee powder. Generally, minimum contact times in excess of four minutes and effective to transfer sufficient aromatics from the water phase to the glyceride to deliver a groundsy coffee aroma are required in batch reactors. Shorter contact times, as low as about 30 seconds, can be effective to transfer said groundsy coffee aromas to the glyceride in continuous reactors. Minimum contact times may vary as a function of the processing conditions such as contact temperature, contact ratio, etc., employed, but such variations are seen to fall within the scope of the present invention.

The glyceride phase which now contains partitioned grinder gas coffee aromas from the water phase is separated therefrom by any suitable liquid-liquid separation technique, typically by centrifugation. The separated water phase may contain trace amounts of desirable grinder gas coffee aromas which may be recovered by recycling said water phase into a second liquid-liquid contact with a glyceride, either alone or in combination with an additional grinder gas coffee aroma-containing water phase.

The separated glyceride phase contains grinder gas coffee aromas which are discarded in existing prior art systems. Said glyceride is added to the pressure vessel from whence the water phase was previously removed, said addition generally being via a high pressure pump. The pressure vessel contains a gaseous carbon dioxide plus aromatics phase and a liquid carbon dioxide plus aromatics phase and is typically at a pressure of about 5.17 MPa to 6.55 MPa (750 psia to about 950 psia). The high pressure pump must supply a pressure in excess of the vessel pressure, typically by at least 0.345 MPa (50 psia), preferably by at least 0.689 MPa (100 psia), and, most preferably by at least 1.378 MPa (200 psia), in order to supply the glyceride to the pressure vessel.

The pressure vessel is maintained at a temperature of 21.1°C to 29.4°C (70 to 85°F), preferably about 23.9°C (75°F) to about 29.4°C (85°F) and thereby a pressure of about 5.17 MPa (750 psia) to about 6.55 MPa (950 psia), for a sufficient period to allow the establishment of vapor-liquid equilibrium. At equilibrium there exists in the pressure vessel three phases, each containing a percentage of grinder gas coffee aromatics, the phases being (1) a gaseous carbon dioxide phase, (2) a liquid carbon dioxide phase, and (3) a liquid glyceride phase. Equilibrium is generally established when the pressure in the pressure vessel stabilizes.

Above the pressure vessel is mounted a packed column and a partial or total condenser. The packed column is generally loaded with any packing which is suitable for vapor-liquid mass transfer and which resists corrosion and does not catalyze unwanted thermal degradation reactions (e.g., nickel-plated packing). After the pressure vessel has reached equilibrium, it is allowed to vent into the packed column and the partial or total condenser, which are sealed from the atmosphere. In the case of a partial condenser, a cooling fluid is passed through the condenser, generally at a temperature of about 35°F (1.7°C) to about 70°F (21.1°C), and typically at about 45°F (7.2°C) to about 60°F (15.6°C), thereby condensing a portion of the gaseous carbon dioxide phase containing aromatics to the liquid phase. In the case of a total condenser, a cooling fluid passes through the condenser at temperatures comparable to the partial condenser case, but the system is operated so as to condense the entire gaseous carbon dioxide stream passing therethrough. In this way, a better condensation of coffee aromas is effected and thus a higher degree of coffee aroma recovery is enabled. In either case, the liquid phase returns through the packed column to the pressure vessel as reflux, becoming enriched with aromatics from the rising gaseous phase through mass transfer.

After liquid carbon dioxide begins to reflux through the condenser, the condenser is slowly vented to the atmosphere to allow removal of gaseous carbon dioxide in the case of a partial condenser and liquid carbon dioxide in the case of a total condenser from the pressure vessel system. The carbon dioxide which is vented is "lean" in aromatics because the majority of aromatics are transferred to the refluxing liquid carbon dioxide in the packed column according to the invention. The pressure vessel system is slowly vented from its equilibrium pressure, generally about 5.17 MPa to 6.55 MPa (750 psia to about 950 psia) and typically about 5.86 MPa to 6.20 MPa (850 psia to about 900 psia), and at a temperature of about 23.9°C (75°F) to about 29.4°C (85°F), until the pressure drops to between about 4.48 MPa (650 psia) to about 4.82 MPa (700 psia). The system is vented slowly, generally over a period of several hours and typically for about 3 to 4 hours. It is essential to the invention that the gaseous carbon dioxide not be vented from the pressure vessel system too rapidly while the pressure is being reduced to between about 4.48 MPa to 4.82 MPa (650 psia to 700 psia), because too rapid a vent results in insufficient aromatic mass transfer from the gaseous carbon dioxide phase to the liquid carbon dioxide phase in the packed column. This, in turn, has been found to result in an aromatized glyceride of inferior quality. In a preferred embodiment of the invention, "lean" gaseous carbon dioxide is vented through small diameter capillary tubing to enable reliable control of the vent rate.

After the pressure in the pressure vessel has dropped to about 4.48 MPa to 4.82 MPa (650 psia to 700 psia), the reflux of liquid carbon dioxide is ceased according to the invention. The pressure vessel is thereafter vented to atmospheric pressure and the aromatized glyceride is removed from the pressure vessel. Said aromatized glyceride is typically filtered, standardized by blending with a quantity of unaromatized glyceride, and stored in cans for subsequent use on a soluble coffee packing line.

Gas chromatographic (GC) analysis of the aromatized glyceride produced by the invention prior to standardization demonstrates a large increase in aromatic intensity and an improvement in aromatic quality over prior art methods. GC is an analytic technique routinely used to measure the quantity of coffee aromas present in a particular sample. Total GC counts measure the total aromatic content of a sample whereas individual GC "peaks " on a GC printout measure amounts of individual compounds in a sample. Comparison of GC peaks is often used to compare the quality of one sample to another. It has been found that the present invention yields an aromatized glyceride with about 6.0 to 7.5 x 10^6 total GC counts whereas prior art methods do not exceed about 4.5 to 5.0 x 10^6 total GC counts, when compared by controlled experimentation. Further, the quality of the aromatized glyceride, as reflected by individual GC peaks, is improved by the present invention over prior art methods. Said quality improvement has been proven by expert oranoleptic comparison of standardized control and improved (method of present invention) aromatized soluble coffee samples, and by extensive consumer test comparisons thereof.

Standardization of aromatized glycerides is by GC, thereby producing glycerides with equivalent total quantities of coffee aroma compounds. However, the quality of aromatized glycerides produced by the present invention and prior art methods remains very different because the balance of coffee aromatics in the standardized glycerides as measured by individual GC peaks remains quite different. The present invention recovers and fixes the coffee aromatics of grinder gas in a glyceride such that the resulting aromatized soluble coffee exudes an improved coffee aroma, described as "high impact", "groundsy", and "roast and ground" by panels of experts. It is further noted that the product of the present invention lacks the pungent, sulfury character associated with prior art methods due to the balanced character of the aromatized glyceride.

## EXAMPLE 1

Grinder gas collected from roast and ground coffee grinders was condensed in a battery of liquid nitrogen jacketed, scraped-surface heat exchangers.

The knockout water was discarded. The condensed grinder gas frost was loaded into a pressure vessel with an internal volume of about 0.241m³ (8½ ft³) and allowed to reach vapor-liquid equilibrium. A peak equilibrium pressure of 6.20 MPa (900 psig) was attained at 29.4°C (85°F). The liquid water phase was drained from the bottom of the pressure vessel through a drain valve, which was thereafter immediately closed to maintain the liquid and gaseous carbon dioxide at equilibrium within the pressure vessel. The liquid water phase was placed in a batch tank, wherein coffee oil was added at a volume ratio of 1:1. The liquid water and coffee oil were contacted with agitation at ambient temperature for 15 minutes. The oil was then separated from the water by centrifugation and injected back into the pressure vessel by a high pressure pump at a pressure of 7.23 MPa (1050 psig).

The pressure vessel was then vented into a packed column and a partial condenser, said partial condenser cooled to 15.6°C (60°F) by recirculating water. Gaseous carbon dioxide containing coffee aromatics was condensed in the partial condenser, and passed back down through the packed column to the pressure vessel. Said return of the condensed liquid through the packed column was observed through a site glass and once a steady stream of returning liquid was observed, the partial condenser was allowed to vent slowly through capillary tubing to the atmosphere at a rate of 3500 cc/min. The pressure vessel was maintained at 26.7°C (80°F) throughout the controlled venting and simultaneous refluxing period. Venting at the 3500 cc/min rate was maintained until the pressure in the pressure vessel to 4.68 MPa (680 psig), at which time the recirculating water supply to the partial condenser was ceased and the partial condenser vent rate was increased by ten-fold.

After the pressure vessel reached atmospheric pressure, the aromatized glyceride was removed therefrom and filtered. Analysis by gas chromatography (GC) demonstrated $7.5 \times 10^6$ total GC counts. The aromatized coffee oil was then blended with unaromatized coffee oil until a total GC level of $3.2 \times 10^6$ counts was obtained. This standarized coffee oil was spray-plated on soluble coffee powder at a level of 0.10% by weight, which was then packed in standard coffee jars. Expert evaluations termed the aromatized coffee powder so produced to be of an improved quality, having a "high impact", "groundsy", "roast and ground" jar aroma. It was found that this improved jar aroma was maintained over extended storage as well.

## Claims

1. A method for producing an aromatized soluble coffee product comprising the steps of:

a) condensing, as a frost, coffee grinder gas or other coffee aroma-bearing gas which has a high carbon dioxide content;

b) placing the grinder gas frost in a pressure vessel;

c) supplying heat to the contents of the vessel and allowing the frost to equilibrate at a pressure excess of 3.49 MPa (506.2 psia) and at a temperature of greater than 0°C (32°F), to form three phases: (1) gaseous carbon dioxide plus aromatics, (2) liquid carbon dioxide plus aromatics, and (3) liquid water containing aromatics;

d) removing the water phase which contains aromatics from the vessel;

e) contacting a glyceride with the water phase of step d) for a time effective to transfer sufficient aromatics from said water phase to the glyceride to impart a "roasted and ground" coffee aroma to the soluble coffee product; f) introducing the glyceride, which contains aromatics transferred from the water phase, into the pressure vessel of step b);

g) supplying heat to the contents of the pressure vessel if necessary in order to raise the temperature to between 21.1°C to 29.4°C (70 and 85°F), and thereby increase the pressure to about 5.17 MPa to 6.55 MPa (750 to 959 psia), to form three phases: (1) gaseous carbon dioxide plus aromatics, (2) liquid carbon dioxide plus aromatics, and (3) liquid glyceride which contains water phase aromatics;

h) refluxing, in a packed column, liquid carbon dioxide and gaseous carbon dioxide phases, while slowly venting thereby removing meager in aromatics carbon dioxide from the vessel and concentrating aromatics in the glyceride, until the pressure drops to about 4.48 MPa to 4.82 MPa (650 to 700 psia);

i) depressurizing the vessel;

j) obtaining an aromatized glyceride; and

k) combining the aromatized glyceride with soluble coffee powder.

2. A method as claimed in claim 1 wherein the contents of the pressure vessel of step c) are heated to a temperature of about 21.1°C to 29.4°C (70°F to 85°F).

3. A method as claimed in claim 1 or claim 2 wherein the water phase and glyceride of step e) are contacted at a volume ratio of 0.5:1 to 4:1 water to glyceride.

4. A method as claimed in claim 3 wherein the water and glyceride are contacted at a volume ratio of 1:1 to 1.5:1 water to glyceride.

5. A method as claimed in claim 3 wherein the water and glyceride are contacted in a batch reactor for in excess of 4 minutes.

6. A method as claimed in claim 5 wherein the water and glyceride are contacted for in excess of 8 minutes.

7. A method as claimed in claim 3 or claim 4 wherein the water and glyceride are contacted in a continuous reactor for in excess of 30 seconds.

8. A method as claimed in any of claims 3 to 7 wherein the water and glyceride are contacted at a temperature of about 1.7°C to 48.9°C (35°F to about 120°F).

9. A method as claimed in any preceding claim which further comprises centrifuging the water and glyceride to separate the glyceride therefrom.

10. A method as claimed in any preceding claim wherein the lean carbon dioxide is vented over a time in excess of 3 hours.

11. A method as claimed in any preceding claim wherein the liquid carbon dioxide of step h) is condensed from the gaseous phase in an partial condenser.

12. A method as claimed in claim 11 wherein the liquid carbon dioxide is condensed at a temperature of about 1.7°C (35°F) to about 21.1°C (70°F).

13. A method as claimed in claim 11 wherein said condensation is at a temperature of about 7.2°C (45°F) to about 15.6°C (60°F).

14. A method as claimed in any preceding claim wherein a site glass is mounted on the packed column.

15. A method as claimed in any preceding claim further comprising standardizing the aromatized glyceride of step j) by blending with an unaromatized glyceride.

## Revendications

1. Procédé de production d'un produit de café soluble aromatisé comprenant les stades de:

a) condensation, sous forme de givre, d'un gaz de moulin à café ou d'un autre gaz portant un arôme de café qui a une teneur élevée en anhydride carbonique;

b) introduction du givre de gaz de moulin dans un récipient à pression;

c) fourniture de chaleur au contenu du récipient et mise en équilibre du givre sous une pression supérieure à 3,49 MPa (506,2 psia) et à une température supérieure à 0°C (32°F) pour former trois phases: (1) anhydride carbonique gazeux plus substances aromatiques, (2) anhydride carbonique liquide plus substances aromatiques, et (3) eau liquide contenant des substances aromatiques;

d) élimination de la phase aqueuse qui contient des substances aromatiques du récipient;

e) mise en contact d'un glycéride avec la phase aqueuse du stade d) pendant un temps efficace pour faire passer une quantité suffisante de substances aromatiques de cette phase aqueuse dans le glycéride pour conférer au produit de café soluble un arôme de café "torréfié et moulu";

f) introduction du glycéride, qui contient les substances aromatiques transférées à partir de la phase aqueuse, dans le récipient à pression du stade b);

g) fourniture de chaleur au contenu du récipient à pression, si cela est nécessaire, pour élever la température entre 21,1°C et 29,4°C (70 et 85°F), et élever ainsi la pression à environ 5,17 MPa à 6,55 MPa (750 à 950 psia), pour former trois phases: (1) anhydride carbonique gazeux plus substances aromatiques, (2) anhydride carbonique liquide plus substances aromatiques, et (3) glycéride liquide qui contient des substances aromatiques de phase aqueuse;

h) chauffage sous reflux, dans une colonne garnie, des phases anhydride carbonique liquide et anhydride carbonique gazeux, tout en relâchant lentement la pression, éliminant ainsi de l'anhydride carbonique pauvre en substances aromatiques du récipient et concentrant ainsi les substances aromatiques dans le glycéride jusqu'à ce que la pression s'abaisse à environ 4,48 MPa à 4,82 MPa (650 à 700 psia);

i) dépressurisation du récipient;

j) obtention d'un glycéride aromatisé; et

k) combinaison du glycéride aromatisé avec de la poudre de café soluble.

2. Procédé suivant la revendication 1, dans lequel le contenu du récipient à pression du stade c) est chauffé à une température d'environ 21,1°C à 29,4°C (70°F à 85°F).

3. Procédé suivant les revendications 1 ou 2, dans lequel la phase aqueuse et le glycéride du stade c) sont mis en contact dans un rapport volumique de l'eau au glycéride de 0,5:1 à 4:1.

4. Procédé suivant la revendication 3, dans lequel l'eau et le glycéride sont mis en contact dans un rapport volumique de l'eau au glycéride de 1:1 à 1,5:1.

5. Procédé suivant la revendication 3, dans lequel l'eau et le glycéride sont mis en contact dans un réacteur discontinu pendant plus de 4 minutes.

6. Procédé suivant la revendication 5, dans lequel l'eau et le glycéride sont mis en contact pendant plus de 8 minutes.

7. Procédé suivant les revendications 3 ou 4, dans lequel l'eau et le glycéride sont mis en contact dans un réacteur continu pendant plus de 30 secondes.

8. Procédé suivant l'une quelconque des revendications 3 à 7, dans lequel l'eau et le glycéride sont mis en contact à une température d'environ 1,7°C à 48,9°C (35°F à environ 120°F).

9. Procédé suivant l'une quelconque des revendications précédentes, qui comprend en outre la centrifugation de l'eau et du glycéride pour en séparer le glycéride.

10. Procédé suivant l'une quelconque des revendications précédentes, dans lequel l'anhydride carbonique appauvri est expulsé sur une durée supérieure à 3 heures.

11. Procédé suivant l'une quelconque des revendications précédentes, dans lequel l'anhydride carbonique liquide du stade h) est condensé à partir de la phase gazeuse dans un condenseur partiel.

12. Procédé suivant la revendication 11, dans lequel l'anhydride carbonique liquide est condensé à une température d'environ 1,7°C (35°F) à environ 21,1°C (70°F).

13. Procédé suivant la revendication 11, dans lequel cette condensation s'effectue à une température d'environ 7,2°C (45°F) à environ 15,6°C (60°F).

14. Procédé suivant l'une quelconque des revendications précédentes, dans lequel un verre de visée (site glass) est monté sur une colonne garnie.

15. Procédé suivant l'une quelconque des revendications précédentes, comprenant en outre la mise aux normes du glycéride aromatisé du stade j) par mélange avec un glycéride non aromatisé.

**Patentansprüche**

1. Verfahren zum Erzeugen eines aromatisierten, löslichen Kaffeeprodukts mit folgenden Schritten:

a) Kaffeemahlgas oder ein anderes Kaffeearoma enthaltendes Gas mit hohem Kohlendioxidgehalt wird zu einem Reif kondensiert;

b) das Mahlgas wird in ein Druckgefäß eingebracht;

c) dem Gefäßinhalt wird Wärme zugeführt, und dem Reif wird gestattet, unter einem Druck über 3,49 MPa und bei einer Temperatur über 0°C einen Gleichgewichtszustand anzunehmen, wobei drei Phasen gebildet werden:

1) wäßriges Kohlendioxid und Aromastoffe,

2) flüssiges Kohlendioxid und Aromastoffe, und

3) flüssiges Wasser, das Aromastoffe enthält;

d) die Aromastoffe enthaltende Wasserphase wird aus dem Gefäß entfernt;

e) ein Glycerid wird mit der Wasserphase des Schritts d) so lange in Berührung gehalten, daß aus der Wasserphase so viel Aromastoffe in das Glycerid übergehen, daß das lösliche Kaffeeprodukt das Aroma von "geröstetem und gemahlenem Kaffee" erhält;

f) das aus der Wasserphase übertragene Aromastoffe enthaltende Glycerid wird in das Druckgefäß nach Schritt b) eingebracht;

g) dem Inhalt des Druckgefäßes wird erforderlichenfalls Wärme zugeführt, um die Temperatur auf einen Wert zwischen 21,1 und 29,4°C zu erhöhen und dadurch den Druck auf etwa 5,17 MPa bis 6,55 MPa zu erhöhen, wobei drei Phasen gebildet werden:

1) gasförmiges Kohlendioxid und Aromastoffe,

2) flüssiges Kohlendioxid und Aromastoffe und

3) Aromastoffe aus der Wasserphase enthaltendes, flüssiges Glycerid;

h) in einer Füllkörperkolonne werden die flüssige Kohlendioxidphase und die gasförmige Kohlendioxidphase zum Rückfluß gebracht und wird dabei langsam Gas entweichen gelassen, so daß aromastoffarmes Kohlendioxid aus dem Gefäß abgezogen wird und die Aromastoffe sich in dem Glycerid anreichern, bis der Druck auf etwa 4,48 bis 4,82 MPa gesunken ist;

i) das Gefäß wird druckentlastet;

j) es wird ein aromatisiertes Glycerid erhalten; und

k) das aromatisierte Glycerid wird mit löslichem Kaffeepulver vereinigt.

2. Verfahren nach Anspruch 1, dadurch gekennzeichnet, daß im Schritt c) der Inhalt des Druckgefäßes auf eine Temperatur von etwa 21,1 bis 29,4°C erwärmt wird.

3. Verfahren nach Anspruch 1 oder 2, dadurch gekennzeichnet, daß im Schritt e) die Wasserphase und das Glycerid in einem Volumenverhältnis von 0,5:1 bis 4:1 von Wasser zu Glycerid miteinander in Berührung gebracht werden.

4. Verfahren nach Anspruch 1, dadurch gekennezichnet, daß das Wasser und das Glycerid in einem Volumenverhältnis von 1:1 bis 1,5:1 von Wasser zu Glycerid miteinander in Berührung gebracht werden.

5. Verfahren nach Anspruch 3, dadurch gekennzeichnet, daß das Wasser und das Glycerid in einem chargenweise arbeitenden Reaktor länger als 4 Minuten miteinander in Berührung gehalten werden.

6. Verfahren nach Anspruch 5, dadurch gekennzeichnet, daß das Wasser und das Glycerid länger als 8 Minuten miteinander in Berührung gehalten werden.

7. Verfahren nach Anspruch 3 oder 4, dadurch gekennzeichnet, daß das Wasser und das Glycerid in einem kontinuierlich arbeitenden Reaktor länger als 30 Sekunden miteinander in Berührung gehalten werden.

8. Verfahren nach einem der Ansprüche 3 bis 7, dadurch gekennzeichnet, daß das Wasser und das Glycerid miteinander bei einer Temperatur von etwa 1,7 bis 48,9°C miteinander in Berührung gehalten werden.

9. Verfahren nach einem der vorhergehenden Ansprüche, dadurch gekennzeichnet, daß das Wasser und das Glycerid zum Abtrennen des Glycerids zentrifugiert werden.

10. Verfahren nach einem der vorhergehenden Ansprüche, dadurch gekennzeichnet, daß das verarmte Kohlendioxid länger als 3 Stunden abziehen gelassen wird.

11. Verfahren nach einem der vorhergehenden Stoffe, dadurch gekennzeichnet, daß im Schritt (h) das flüssige Kohlendioxid in einem eine Teilkondensation bewirkenden Kondensator aus der Gasphase kondensiert wird.

12. Verfahren nach Anspruch 11, dadurch gekennzeichnet, daß das flüssige Kohlendioxid bei einer Temperatur von etwa 1,7 bis etwa 21,1°C kondensiert wird.

13. Verfahren nach Anspruch 11, dadurch gekennzeichnet, daß die Kondensation bei einer Temperatur von etwa 7,2 bis etwa 15,6°C erfolgt.

14. Verfahren nach einem der vorhergehenden Ansprüche, dadurch gekennzeichnet, daß auf der Füllkörperkolonne ein Schauglas montiert ist.

15. Verfahren nach einem der vorhergehenden Ansprüche, dadurch gekennzeichnet, daß das im Schritt (j) erhaltene, aromatisierte Glycerid durch Mischen mit einem nichtaromatisierten Glycerid eingestellt wird.